# EUROPÄISCHE PATENTANMELDUNG

(11) **EP 1 262 364 A2**
(43) Veröffentlichungstag der Anmeldung: **04.12.2002**
(21) Anmeldenummer: 02012028.3
(22) Anmeldetag: 31.05.2002
(51) Int. Cl.: B60P 3/025, B60P 3/14

(54) **Fahrzeug, insbesondere Nutzfahrzeug**

(30) Priorität: 31.05.2001 DE 20109059 U
(71) Anmelder: Frey Elektroanlagen GmbH, 79279 Vörstetten (DE)
(72) Erfinder: Frey, Heinrich, 79279 Vorstetten (DE)
(74) Vertreter: Goy, Wolfgang, Dipl.-Phys.

(57) **Zusammenfassung**

Die Erfindung betrifft ein Fahrzeug, insbesondere Nutzfahrzeug, mit einem in einem Nutzraum des Fahrzeugs befindlichen Schrank mit mehreren Fächern zum Unterbringen von Gegenständen. Um einen verbesserten Schrank zu schaffen, dessen Fächer besser zugänglich sind, schlägt die Erfindung vor, daß die Fächer in dem Schrank an einer endlosen Umlaufeinrichtung angeordnet sind.

## Beschreibung

Die Erfindung betrifft ein Fahrzeug, insbesondere Nutzfahrzeug, nach dem Oberbegriff des Anspruchs 1.

Bei der Erfindung geht es um Fahrzeuge, insbesondere um Nutzfahrzeuge mit einem Materialladeraum hinten. Solche Fahrzeuge können beispielsweise Kundendienstfahrzeuge, Transporter, Montagewagen etc. von Firmen, Handwerkern, Zulieferern, Auslieferern etc. für Ersatzteile, Kleinteile etc. sein.

Es ist bekannt, derartige Nutzfahrzeuge im hinteren Laderaum mit magazinartigen Schränken zu versehen, welche eine Mehrzahl von Fächern aufweisen, in denen die unterschiedlichsten Gegenstände untergebracht werden können. Das Problem bei den bekannten Schränken besteht darin, daß die Fächer über die gesamte Breite bzw. Länge sowie Höhe des Schrankes verteilt sind. Entsprechend muß der Schrank über den gesamten Bereich der Fächer zugänglich sein. Da aber gewöhnlich derartige Fahrzeuge voll mit Ausrüstungsgegenständen beladen sind, bleibt es nicht aus, daß man im Fahrzeug über andere darin befindliche Gegenstände klettern muß, um an ein bestimmtes Fach heranzukommen. Befindet sich das Fach darüber hinaus im Bereich des Fahrzeugbodens, ist es oft sogar noch erforderlich, davor befindliche Gegenstände zuvor wegzuräumen.

Davon ausgehend liegt der Erfindung die **Aufgabe** zugrunde, ein Fahrzeug, insbesondere Nutzfahrzeug, mit einem verbesserten Schrank zu schaffen, dessen Fächer besser zugänglich sind.

Die technische **Lösung** ist gekennzeichnet durch die Merkmale im Kennzeichen des Anspruchs 1.

Dadurch ist ein Fahrzeug, insbesondere Nutzfahrzeug, mit einem im Laderaum des Fahrzeugs befindlichen Magazinschrank geschaffen, dessen Fächer zur Unterbringung sowie zur Entnahme der unterschiedlichsten Gegenstände sehr leicht zugänglich sind. Die Grundidee des erfindungsgemäßen Schrankes für derartige Nutzfahrzeuge besteht darin, die rotierenden Ablagefächer an einer paternosterartigen Umlaufeinrichtung anzuordnen. Ebenso wie beim Paternoster sind dabei die Fächer immer horizontal ausgerichtet und werden somit während des Umlaufs nicht auf den Kopf gestellt. Der Zugang des Schrankes ist dabei vorzugsweise direkt von hinten im Bereich der Heckklappe des Fahrzeugs. Durch den Umlauf der Fächer gelangen diese nach einer gewissen Zeit in den Bestückungs- sowie Entnahmebereich. Dies gilt auch für die Fächer, die sich anfänglich tief im Laderaum befinden und die bei den bisherigen Schränken nur sehr schwer - wenn überhaupt - zugänglich gewesen wären. Der Magazinschrank mit seinen rotierenden Fächern ist dabei an die Elektrik des Fahrzeugs angeschlossen. Der Schrank kann je nach Bedarf und Nutzung in beliebiger Größe ausgeführt sein. Das System insgesamt ist platzsparend, übersichtlich und vor allem ist immer alles aufgeräumt.

Gemäß der Weiterbildung in Anspruch 2 sind die Fächer an einer endlos umlaufenden Kette oder dgl. angeordnet. Dies stellt eine technisch einfache Möglichkeit dar, einerseits um die Fächer zu tragen und um andererseits auf einfache Weise einen Umlauf der Fächer zu bewerkstelligen.

Gemäß einer ersten Alternative in Anspruch 3 erfolgt der Umlauf der Fächer in vertikaler Richtung. Dies ermöglicht es, den Magazinschrank seitlich an der Fahrzeugwand aufzustellen, nämlich dort, wo im bisherigen Normalfall Regale aller Bauformen aufgestellt werden. Der Schrank weist somit an der Rückseite des Fahrzeugs eine Schmalseite auf, so daß durch eine entsprechende Öffnung die Fächer zugänglich sind.

Alternativ kann gemäß Anspruch 4 der Umlauf der Fächer auch in horizontaler Richtung erfolgen. In diesem Fall ist der Magazinschrank auf dem Boden des Fahrzeugs als Bodenaufbau ausgebildet und von hinten ebenfalls bedienbar. Selbstverständlich können mehrere erfindungsgemäße Magazinschränke auf diese Weise übereinandergestapelt werden. Auch ist es denkbar, auf dem Magazinschrank weitere Gegenstände zu lagern. Ebenso wie bei dem vertikalen Umlauf der Fächer können auch beim vorliegenden horizontalen Umlauf der Fächer diese schleifenartige Hin- und Herbewegungen durchführen, um so den gesamten Innenraum des Magazinschrankes optimal auszufüllen.

Bei der Weiterbildung gemäß Anspruch 5 dient die Öffnung im Magazinschrank der Bestükkung und der Entnahme der Gegenstände in die Fächer bzw. aus den Fächern. Dies erfolgt durch die Öffnung an einer vorgegebenen Stelle, insbesondere an der Rückseite des Fahrzeugs.

Eine Weiterbildung hiervon schlägt gemäß Anspruch 6 vor, daß die Öffnung verschließbar ist. Als Verschlußeinrichtung kann beispielsweise eine Klappe dienen. Diese wird waagerecht nach unten geklappt und kann gleichzeitig als Ablage dienen. Zusätzlich kann noch eine zweite Klappe vorgesehen sein, welche nach oben geklappt wird.

Eine weitere Weiterbildung gemäß Anspruch 7 schlägt vor, daß der Schrank ein Bedienfeld zum Betätigen der Umlaufeinrichtung aufweist. Dieses Bedienfeld ist dabei vorzugsweise im Bereich der Öffnung angeordnet. Insbesondere weist das Bedienfeld elektrische Taster auf, um die Umlaufeinrichtung in Bewegung zu setzen oder anzuhalten.

Gemäß der Weiterbildung in Anspruch 8 kann die Umlaufeinrichtung durch Knopfdruck kontinuierlich in Gang gesetzt werden. Es ist dabei denkbar, daß der Knopf dauernd gedrückt gehalten wird und dann losgelassen wird, wenn sich das gewünschte Fach im Bereich der Öffnung im Schrank befindet. Es ist aber alternativ auch denkbar, daß durch Loslassen des Knopfes nach der ersten Betätigung die Umlaufeinrichtung in Gang gesetzt wird und daß durch ein zweites Betätigen des Knopfes die Umlaufeinrichtung wieder angehalten wird.

Eine bevorzugte Variante schlägt Anspruch 9 vor. Die Grundidee besteht in einer elektrischen Bedienung mit Vorwahl, so daß das gewünschte Fach durch Eingabe eines entsprechenden Codes ohne weitere Kontrolle durch den Benutzer automatisch an die Entnahmestelle verfahren wird.

Ein Ausführungsbeispiel eines erfindungsgemäßen Fahrzeugs in Form eines Nutzfahrzeugs mit dem erfindungsgemäßen Magazinschrank wird nachfolgend anhand der Zeichnungen beschrieben. In diesen zeigt:
- Fig. 1: eine rein schematische, perspektivische Ansicht eines Fahrzeugs von der Rückseite her mit einer ebenfalls schematischen Darstellung des Schrankes;
- Fig. 2: eine Seitenansicht des Schrankes in Fig. 1 ohne Fahrzeug;
- Fig. 3: eine perspektivische Darstellung einer zweiten Ausführungsvariante des Schrankes;
- Fig. 4: eine Draufsicht auf den Schrank in Fig. 3, wobei die Deckplatte weggelassen ist.

Im hinteren Laderaum eines Fahrzeugs 1 in Form eines Nutzfahrzeugs befindet sich ein senkrecht stehender Schrank 2 an der linken Seitenwand des Fahrzeugs 1.

Der Schrank 2 weist im Innern eine Umlaufeinrichtung 3 mit einer Kette 4 auf. An dieser Kette 4 sind im wesentlichen quaderförmige Fächer 5 angeordnet. Die Antriebseinrichtung für einen Endlosumlauf der Kette 4 ist nicht dargestellt. Es handelt sich aber bei dieser Antriebseinrichtung um einen Elektromotor, welcher an die Elektrik des Fahrzeugs 1 angeschlossen ist. Der Schrank 2 weist im Bereich der Rückseite des Fahrzeugs 1 weiterhin eine nach unten aufgehende Klappe 6 auf, welche eine Öffnung 7 im Schrank 2 definiert. Oberhalb der Klappe 6 befindet sich ein Bedienfeld 8 mit Tasten.

Die Funktionsweise ist wie folgt:

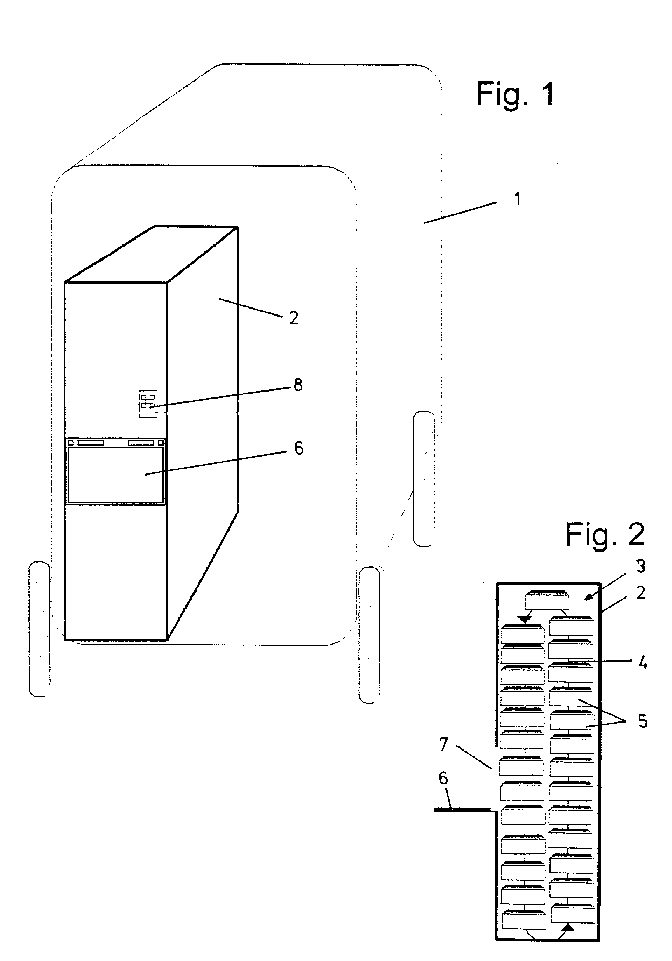

In Fig. 2 ist schematisch der Umlauf der Fächer 5 angedeutet. Entsprechend der Länge des Schrankes 2 ist es auch denkbar, daß die Umlaufeinrichtung 3 mit ihrer Kette 4 eine schlaufenförmige Hin- und Herbewegung durchläuft, um so den Platz im Innern des Schrankes 2 optimal auszunutzen. Um ein ganz bestimmtes Fach 5 mit entsprechenden Gegenständen zu bestücken oder um aus einem ganz bestimmten Fach 5 einen Gegenstand herauszunehmen, ist es erforderlich, das entsprechende Fach 5 in den Bereich der Öffnung 7 zu verfahren. Zu diesem Zweck wird zunächst die Klappe 6 geöffnet, d.h. nach unten verschwenkt, so daß sie gleichzeitig auch als Ablage dient. Durch Betätigen des entsprechenden Tasters im Bedienfeld 8 wird dann die Umlaufeinrichtung 3 derart in Bewegung gesetzt, bis sich das gewünschte Fach 5 im Bereich der Öffnung 7 befindet. In dieser Position wird die Umlaufeinrichtung 3 gestoppt.

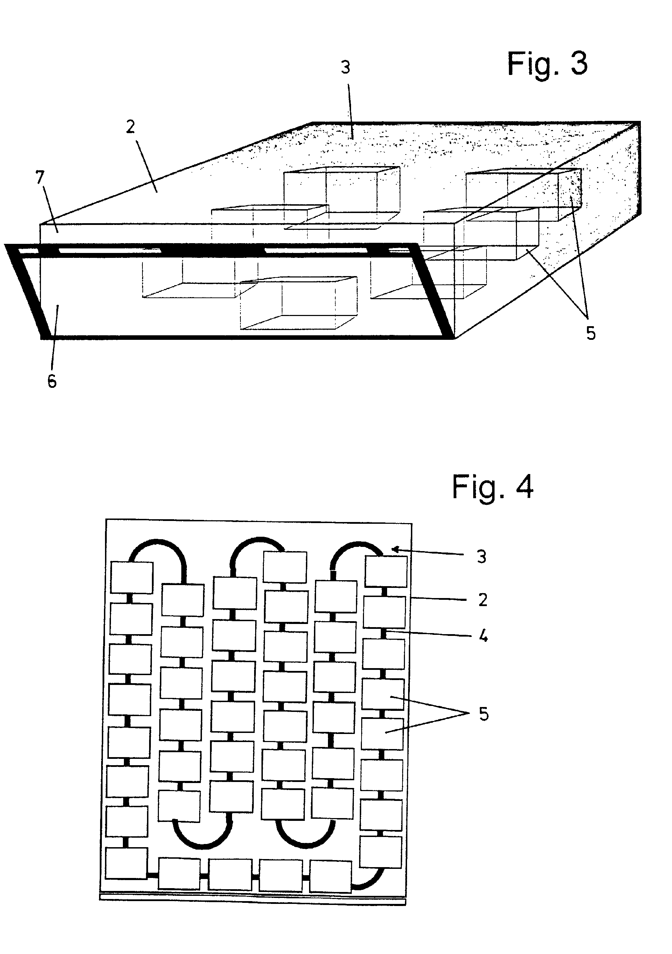

Eine Alternative zu dem Schrank 2 der Fig. 1 und 2 sieht der Schrank 2 der Fig. 3 und 4 vor. Der Unterschied besteht darin, daß hier der Schrank 2 als eine Art Zwischenboden auf dem Boden des Fahrzeugs 1 aufliegt. Hier ist dann die Umlaufeinrichtung 3 derart ausgebildet, daß die Fächer 5 in einer horizontalen Ebene umlaufen, wie dies in Fig. 4 dargestellt ist. Auch hier ist wiederum eine Klappe 6 vorgesehen, welche sich über die gesamte Breite des Schrankes 2 erstreckt.

Die Funktionsweise dieser Ausführungsvariante ist vom Prinzip her gleich der Funktionsweise des senkrechten Schrankes 2 der Fig. 1 und 2.

### Bezugszeichenliste

- 1: Fahrzeug
- 2: Schrank
- 3: Umlaufeinrichtung
- 4: Kette
- 5: Fächer
- 6: Klappe
- 7: Öffnung
- 8: Bedienfeld

## Patentansprüche

1. Fahrzeug (1), insbesondere Nutzfahrzeug,
mit einem in einem Nutzraum des Fahrzeugs (1) befindlichen Schrank (2) mit mehreren Fächern (5) zum Unterbringen von Gegenständen,
**dadurch gekennzeichnet,**
**daß** die Fächer (5) in dem Schrank (2) an einer endlosen Umlaufeinrichtung (3) angeordnet sind.

2. Fahrzeug nach dem vorhergehenden Anspruch,
**dadurch gekennzeichnet,**
**daß** die Fächer (5) an einer endlos umlaufenden Kette (4) oder dgl. angeordnet sind.

3. Fahrzeug nach Anspruch 1 oder 2,
**dadurch gekennzeichnet,**
**daß** der Umlauf der Fächer (5) in vertikaler Richtung erfolgt.

4. Fahrzeug nach Anspruch 1 oder 2,
**dadurch gekennzeichnet,**
**daß** der Umlauf der Fächer (5) in horizontaler Richtung erfolgt.

5. Fahrzeug nach einem der vorhergehenden Ansprüche,
**dadurch gekennzeichnet,**
**daß** der Schrank (2) eine Öffnung (7) aufweist, an der jedes Fach (5) beim Umlauf vorbeikommt und durch die hindurch die Fächer (5) zugänglich sind.

6. Fahrzeug nach Anspruch 5,
**dadurch gekennzeichnet,**
**daß** die Öffnung (7) verschließbar ist.

7. Fahrzeug nach Anspruch 5 oder 6,
**dadurch gekennzeichnet,**
**daß** der Schrank (2) ein Bedienfeld (8) zum Betätigen der Umlaufeinrichtung (3) aufweist.

8. Fahrzeug nach Anspruch 7,
**dadurch gekennzeichnet,**
**daß** die Umlaufeinrichtung (3) durch Knopfdruck kontinuierlich umläuft.

9. Fahrzeug nach Anspruch 7,
**dadurch gekennzeichnet,**
**daß** die Fächer (5) durch Eingabe eines Codes gezielt ansteuerbar sind.
